# EUROPÄISCHE PATENTSCHRIFT

(11) **EP 2 480 432 B1**
(45) Veröffentlichungstag und Bekanntmachung des Hinweises auf die Patenterteilung: **15.01.2014**
(21) Anmeldenummer: 10739337.3
(22) Anmeldetag: 27.07.2010
(51) Int. Cl.: B60R 19/34

(54) **VORRICHTUNG UND VERFAHREN ZUM ADAPTIVEN ABBAU VON CRASHENERGIE**
APPARATUS AND METHOD FOR THE ADAPTIVE DECREASE OF CRASH ENERGY
DISPOSITIF ET PROCÉDÉ POUR LA REDUCTION ADAPTATIVE D'ÉNERGIE DE COLLISION

(30) Priorität: 24.09.2009 DE 102009044966
(43) Veröffentlichungstag der Anmeldung: 01.08.2012
(73) Patentinhaber: Robert Bosch GmbH, 70442 Stuttgart (DE)
(72) Erfinder: FRIEDRICH, Thomas, 71691 Freiberg A. N. (DE); NAGEL, Willi, 71686 Remseck/Hochdorf (DE)
(86) Internationale Anmeldenummer: PCT/EP2010/060844
(87) Internationale Veröffentlichungsnummer: WO 2011/035952

(56) Entgegenhaltungen:
- EP-A2- 1 792 786
- EP-A2- 2 014 517
- DE-A1- 19 745 656

## Beschreibung

### Stand der Technik

Die Erfindung betrifft eine Vorrichtung bzw. ein Verfahren zum adaptiven Abbau von Crashenergie nach der Gattung der unabhängigen Patentansprüche.

Aus EP 1 792 786 A2 ist eine Crashbox bekannt, die ein gehäuseartiges Deformationsprofil mit einer längsträgerseitigen Flanschplatte aufweist und als Faltkonstruktion aus Metallblech ausgebildet ist. Das Deformationsprofil besteht aus zwei Schalenbauteilen, wobei an jedem Schalenbauteil ein Flanschplattenabschnitt angeformt ist. Die Schalenbauteile werden aus Ausgangsplatinen aus Metallblech gefaltet, anschließend zusammengesetzt und mittels Widerstandsschweißpunkten aneinander gefügt. Dies stellt eine herkömmliche Crashbox dar ohne jede Adaption auf einen Crashvorgang. Eine solche Adaption ist jedoch beispielsweise aus DE 197 45 656 A1 bekannt. Dabei wird ein Pralldämpfer für ein Kraftfahrzeug vorgeschlagen, wobei in Abhängigkeit von einem Precrash-Signal, das ist ein Signal einer Rundumsichtsensorik wie an einer Radarsensorik oder einem Aufprallsignal eine Deformation gesteuert werden kann. Vorgeschlagen wird, dass an einem Deformationselement Schieber sich senkrecht zur Kraftrichtung bewegen und Deformationselemente dadurch sperren, so dass durch die Kraftwirkung diese Deformationselemente durch plastische Verformung aufgrund der Sperrung Crashenergie abbauen. Durch eine parallele Anordnung oder durch einen Ineinanderbau von solchen Deformationselementen ist eine Adaption auf den Crashvorgang möglich. Als weiteres Beispiel wird vorgeschlagen, ein Deformationselement durch eine Verjüngung zum Abbau von Crashenergie zu benutzen. Dabei ist ein Element zur Verjüngung fixiert und ein weiteres kann durch einen Schieber frei gegeben werden, um die Verjüngung zu reduzieren. Die Bewegung des Schiebers erfolgt dabei radial, d.h. senkrecht zur Kraftrichtung und damit zur Längsachse des Deformationselements, üblicherweise ein Zylinder mit einer vorgegebenen Wanddicke.

### Offenbarung der Erfindung

Die erfindungsgemäße Vorrichtung und das erfindungsgemäße Verfahren zum adaptiven Abbau von Crashenergie haben dem gegenüber den Vorteil, dass nunmehr leicht eine mehrstufige Verjüngung des Deformationselements durch die so genannten Matrizenplatten, die eine Öffnung aufweisen, durch die das Deformationselement getrieben wird, möglich ist. Dies ist dadurch möglich, dass die Aktuatorik sich nunmehr ebenfalls in der Richtung bewegt, in der sich auch das Deformationselement bewegt, so dass eine axiale Bewegung der Aktuatorik vorliegt. Durch diese Anordnung ist es möglich, dass eine beliebige Anzahl von Matrizenplatten durch die Aktuatorik gehalten werden kann und so zur Verjüngung beiträgt. Damit ist eine sehr genaue Ansteuerung bzw. Einstellung der Verjüngung leicht möglich. Das Konzept gemäß dem Stand der Technik vermag dies nicht. Außerdem ermöglicht die erfindungsgemäße Vorrichtung, dass die Crashenergie nicht wie im Stand der Technik durch die so genannten Schieber abgestützt werden muss, die die Matrizenplatten halten, sondern die Abstützung der Crashenergie kann beispielsweise über das Gehäuse erfolgen, so dass die Aktuatorik, die die Schieber aufweist, einfacher und nicht so stabil hergestellt werden muss.

Vorliegend ist die Vorrichtung beispielsweise eine adaptive Crashbox, die zumindest Anschlüsse aufweist, um die Aktuatorik in Abhängigkeit vom Steuersignal anzusteuern. Es ist in Weiterbildungen möglich, dass die Vorrichtung selbst ein eigenes Steuergerät und/oder eine Sensorik aufweist, um den Crashvorgang bzw. einen Precrash-Vorgang zu erfassen, wobei das Steuergerät diese Sensorsignale verarbeitet und in Abhängigkeit davon Steuersignale erzeugt.

Der adaptive Abbau der Crashenergie bedeutet, dass die Crashenergie, die durch den Aufprall entsteht, durch die Crashbox in angepasster Weise durch eine plastische Verformung zumindest teilweise aufgenommen wird. Durch die Adaption können Kosten gespart werden. Der Insassenschutz sowie der Partnerschutz, d.h. der Schutz der Insassen des Unfallgegners wird dadurch verbessert.

Bei dem Deformationselement handelt es sich beispielsweise um einen Zylinder aus Stahl, der im Crashvorgang durch die erfindungsgemäße Vorrichtung verjüngt wird und durch diese Verjüngung, die eine plastische Verformung darstellt, ergibt sich ein Abbau der Crashenergie. Neben Stahl können auch andere Materialien wie Kunststoffe oder Werkstoffverbünde oder ähnliches verwendet werden, aber auch andere Geometrien wie eine Konus, ein Zylinder mit einem elliptischen Querschnitt oder auch rechteckige oder quadratische Formen sind hier möglich. Ebenso sind Geometrien verwendbar, dessen Wandstärken nicht über die Länge konstant sind, z.B. Ein zylindrisches Rohr mit zunehmender Wandstärke. Das Deformationselement kann insbesondere hohl sein, z.B. ein einfaches Rohr, oder es kann in der Mitte bzw. in den Hohlräumen, wenn es sich um mehrere Hohlräume handelt, mit diversen Materialien angefüllt sein wie z.B. einem Aluminiumschaum. Dieser Aluminiumschaum bietet neben der höheren Robustheit gegen das Knicken den Vorteil, entweder eine höhere Energieabsorption gewährleisten zu können oder einen kleineren Rohrdurchmesser verwenden zu können. Eine weitere Alternative das Füllmaterial effektiv auszunutzen, ist eine geringere Wandstärke des Rohrs bzw. des Zylinders zu verwenden. Die Erfindung ermöglicht insbesondere eine sehr kompakte Bauweise der erfindungsgemäßen Vorrichtung und spart so Bauraum für andere Baugruppen ein.

Die Richtung, in der sich das Deformationselement bewegt, ist üblicherweise die Crashrichtung. Bei einem Frontalaufprall ist dies in Richtung der Längsachse des Fahrzeugs, die üblicherweise auch als X-Richtung bezeichnet wird. Durch diese Bewegung wird das Deformationselement gegen die Matrizenplatten geführt und durch deren jeweilige Öffnungen hindurchgetrieben, so dass es zu der Verjüngung und damit zum Abbau der Crashenergie durch die plastische Verformung kommt.

Die Aktuatorik ist für die Adaption auf den Crashvorgang essentiell, üblicherweise weist die Aktuatorik Aktuatoren und Schieber auf, die je nach Aktuatorstellung ein- oder ausgefahren werden können, und zwar in axialer Richtung, d.h. bspw. in Fahrzeuglängsrichtung. Ein Aktuator kann dabei einzelne, aber auch mehrere Schieber bewegen. Die Anzahl der benötigen Schieber ist vom Matrizenplattenkonzept abhängig. Die Schieber haben zum Gehäuse und zu den Platten Spiel. So kann die Aktuatorik diese Schieber mit sehr geringen Reibungsverlusten bewegen, was zu einer sehr schnellen Aktuierungszeit führt.

Die Hauptanforderung an die Aktuatoren ist die hohe Geschwindigkeit des Stellens. Die Aktuatoren können stutfenlos arbeiten. Dabei ist eine Verstellung in mehreren Stufen vorteilhaft, da letztendlich an Schnelligkeit gewonnen wird. Sind die Masse und die Reibung gering, ist eine hohe Aktuatordymnamik gewährleistet und die Schaltwege sind kurz. Die Schaltwege können durch eine optimierte Formgebung der Matrizenplatten noch verkürzt werden, z.B. durch eine geringere Dicke am Außendurchmesser.

Unter dem Steuersignal wird eben das Signal verstanden, das die Aktuatorik veranlasst, die entsprechende Verjüngung einzustellen. Dieses Steuersignal kann von außerhalb der Vorrichtung stammen, beispielsweise von einem Sicherheitssteuergerät, insbesondere Airbagsteuergerät. Das Steuersignal kann jedoch auch intern innerhalb der Vorrichtung erzeugt werden, beispielsweise durch ein eigenes Steuergerät oder eine entsprechende Steuerschaltung. Das Steuersignal kann dabei analog ausgeführt sein oder auch digital. Eine digitale Ausführung verlangt eine entsprechende Auswertung durch die Aktuatorik. In einer einfachen Variante könnte das Steuersignal beispielsweise lediglich aus drei Pegeln bestehen, um drei verschiedene Stellungen der Aktuatorik zu signalisieren. Erfindungsgemäß bewegt sich diese Aktuatorik in der Achse der Richtung der ersten Bewegung, das ist also koaxial zur Crashrichtung bzw. Bewegungsrichtung des Deformationselements. Durch die Bewegung der Aktuatorik in dieser Richtung wird die Verjüngung eingestellt. Dabei wird infolge der Bewegung der Aktuatorik wenigstens eine Matrizenplatte mit einer jeweiligen Öffnung, durch die das Deformationselement getrieben wird, für die Einstellung der Verjüngung gehalten. Dabei ist zu beachten, dass meistens eine weitere Matrizenplatte mit einer größeren Öffnung fest eingestellt ist und immer eine Verjüngung bewirkt und durch die Aktuatorik auch gar nicht beeinflusst werden kann. Die Öffnung kann dabei ein Kreis, eine Ellipse oder rechteckige, sechseckige oder andere Formen aufweisen. Die Anzahl der zu haltenden Matrizenplatten wird dabei durch das Steuersignal festgelegt. Werden verschiedene Matrizenplatten mit jeweils unterschiedlichen Öffnungen verwendet, führt dies zu einer Adaption der Verjüngung. Durch die Aktuatorik wird demnach festgelegt, wieviele Matrizenplatten hintereinander geschaltet werden. Nur eine von Schiebern gehaltene Matrizenplatte kann auch eine Verjüngung bewirken, denn ansonsten würde das Deformationselement diese Matrizenplatte aufgrund ihrer vorhandenen Sollbruchstellen trennen und die entstandenen Segmente nach außen in den Hohlraum schieben.

Eine Matrizenplatte ist eine Platte aus einem sehr stabilen Material, die das Deformationselement beim Crash auf einen kleineren Durchmesser plastisch verformt. Je größer der Durchmesserunterschied zwischen dem Deformationselement und der Matrizenplatte ist, desto mehr Energie wird absorbiert. Eine Matrizenplatte besteht aus mindestens eine Sollbruchstelle. Vorteilhafterweise sind jedoch drei Sollbrauchstellen vorgesehen, die alle 120° angeordnet sind. Wenn diese Sollbruchstellen brechen, teilt sich die Matrizenplatte in drei Teilen. Wird die Matrizenplatte von den Schiebern axial gestützt, brechen die Sollbruchstellen nicht und das Deformationselement wird verjüngt. Wird allerdings die Matrizenplatte nicht vom Schieber gestützt, brechen die Sollbruchstellen aufgrund des Eindringens des Deformationselementes. Es entstehen drei Segmente, die keine Verjüngung verursachen.

Alternativ kann eine Matrizenplatten direkt aus mindestens zwei einzelnen Segmenten gefertigt werden, dies erspart den Aufwand für die Herstellung der Sollbruchstellen aber dafür ist Zentrierung der einzelnen Segmente aufwändiger.

Durch die in den abhängigen Ansprüchen aufgeführten Maßnahmen und Weiterbildungen sind vorteilhafte Verbesserungen, der in den unabhängigen Patentansprüchen angegebenen Vorrichtung bzw. des in den unabhängigen Patentansprüchen angegebenen Verfahrens möglich.

Darüber hinaus ist es vorteilhaft, dass die Vorrichtung ein elastisches Element aufweist, das derart angebracht ist, dass das elastische Element einen ersten vorbestimmten Weg aufnimmt bevor sich das Deformationselement bewegt. D.h. kleine Wege werden durch dieses elastische Element abgefangen und führen nicht zu einer Verjüngung des Deformationselements. Durch diese relativ kleine Wegänderung ist es möglich, eine Messung des Intrusionswegs und der Intrusionsgeschwindigkeit durchzuführen. Dies ist für die Steifigkeitseinstellung der Crashstruktur von Vorteil. Dieses elastische Element ermöglicht weiterhin sehr kleine Kraftniveaus wie Parkrempler, das sind Aufpralle unter 5 Stundenkilometer ohne Beschädigung absorbieren zu können. Weiterhin dient das elastische Element zur Kompensation von Einbau Toleranzen der gesamten Frontstruktur. Weiterhin ist damit die erfindungsgemäße Vorrichtung robuster gegen Crashs, die nicht perfekt axial auf die Crashstruktur wirken. So genannte Real World-Crashs mit einer Schrägkomponente werden damit teilweise ausgeglichen. Ein elastisches Element ist z.B. eine Feder, die sich im Deformationselement befinden, vorzugsweise auf Seite des Querträgers. Alternativ kann das Federelement auch aus einem gummiartigen Kunststoff hergestellt werden.

Weiterhin ist es vorteilhaft, dass eine Initialkonfiguration der Vorrichtung derart ist, dass eine maximale Verjüngung des Deformationselements vorgesehen ist und alle Matrizenplatten gehalten werden. D.h. in einer Initialkonfiguration, also einer Anfangsstellung, ist immer vorgesehen, dass die erfindungsgemäße Vorrichtung bzw. das Verfahren auf einen schweren Crash ausgelegt ist und damit eine maximale Verjüngung des Deformationselements vorsieht. Durch das Steuersignal ist es möglich, Matrizenplatten freizugeben und somit die Verjüngung zu reduzieren. Damit ist ein maximaler Selbstschutz für das eigene Fahrzeug erreicht. Dies kann beispielsweise dadurch erreicht werden, dass eine oder mehrere Federn ohne Betätigung des Aktuators dafür sorgt, dass alle Matrizenplatten gehalten werden. Auch andere Möglichkeiten können vorgesehen sein, dass standardmäßig alle Matrizenplatten gehalten werden und so eine maximale Verjüngung erreicht wird. Die Initialkonfiguration ist demnach die Konfiguration die vorliegt, ohne dass die Aktuatorik durch ein Steuersignal betätigt wird. Die maximale Verjüngung ist die, die durch die Matrizenplatte erreicht wird, die den kleinsten Durchmesser hat. Dadurch, dass man dies jedoch schrittweise durchführt, also zwischen der größten und kleinsten Öffnung üblicherweise auch weitere Matrizen mit Öffnungen zwischen größten und kleinsten Durchmesser aufweist, wird ein Übergang erreicht, ohne einen Kraftstoss zu erzeugen.

Es ist weiterhin vorteilhaft, dass die jeweiligen Matrizenplatten, außer derjenigen mit der größten Öffnung, jeweils wenigstens eine Sollbruchstelle aufweisen, die durch die Bewegung des Deformationselements gebrochen wird, wenn kein Halten der jeweiligen Matrizenplatte durch die Aktuatorik vorliegt. Die Sollbruchstellen werden ohne das Halten gebrochen, so dass die Matrizenplatten bzw. deren Restsegmente dann radial zur Seite durch das Deformationselement weggeschoben werden und nicht zur Verjüngung beitragen. Es ist jedoch erfindungswesentlich, dass jede Matrizenplatte individuell angesteuert werden kann, ohne dass Matrizenplatten gehalten werden, die einen größeren Durchmesser haben. Üblicherweise wird jedoch die erste Matrizenplatte, wie oben angegeben, fest eingebaut, so dass diese durch die Aktuatorik gar nicht gehalten werden kann oder muss. Die Sollbruchstellen in den Matrizenplatten können per Laser- oder Wasserstrahlverfahren realisiert werden. Dies erlaubt eine einfache Fertigung und eine bessere Handhabung der Platten, da sie sich selbst zentrieren.

Es ist weiterhin vorteilhaft, dass wenigstens eine Matrizenplatte eine Beschichtung zur Verringerung der Reibung aufweist. Es ermöglicht die Reibung beim radialen Wegschieben der Segmente der Matrizenplatten zu reduzieren und damit dieses Wegschieben zu vereinfachen. Diese Beschichtung kann beispielsweise mittels Teflon oder eines Gleitlackes erfolgen. Ebenso ist eine Beschichtung am Außendurchmesser der Matrizenplatten vorteilhaft, dies verringert die Reibung zwischen Schiebern und Matrizenplatten.

Darüber hinaus ist es vorteilhaft, dass die Vorrichtung einen Geschwindigkeitssensor zur Erfassung der Aufprallgeschwindigkeit aufweist, wobei anhand dessen Ausgangssignals das Steuersignal erzeugt wird. Dieser Geschwindigkeitssensor ist beispielsweise ein Radar, der in der Mittelachse des Deformationselements angeordnet ist und durch das Deformationselement, das üblicherweise hohl ist, hindurchsieht und damit ein Crashobjekt erfassen kann und somit kurz vor dem Aufprall und damit auch die Aufprallgeschwindigkeit ermittelt. Weiterhin ist damit auch eine, wenn auch eingeschränkte, Precrash-Analyse möglich. Neben dem Signal dieses Geschwindigkeitssensors, der auch kapazitiv, induktiv, optisch, Ultraschall oder ein Linearpotentiometer sein kann, können auch Signale anderer Sensoren, beispielsweise einer Precrash-Sensorik wie Radar, Mono oder Stereo-Video oder ein kapazitiver Sensor sein. Vorteilhafter Weise kann durch diese Ausbildung auf den Einbau von so genannten Upfrontsensoren, das sind Beschleunigungssensoren an der Fahrzeugfront, verzichtet werden oder diese direkt in die erfindungsgemäße Vorrichtung eingebaut werden.

Es ist weiterhin vorteilhaft, dass die Aktuatorik induktiv betätigbar ist. Ist die Vorrichtung in ihrer Initialstellung, d.h. alle Matrizenplatten werden gehalten und damit eine maximale Verjüngung vorgesehen, kann durch einen induktiven Aufbau der Aktuatorik, beispielsweise durch das Erregen von Spulen, die Schieber in die Aktuatorik zurückgezogen werden und somit die Matrizenplatten nicht mehr halten, so dass diese dann durch das Deformationselement weggeschoben werden können. Dabei kann beispielsweise für jede Matrizenplatte, die gehalten wird, eine weitere Spule hinzugenommen werden. Aber auch über die Stromstärke kann dies eingestellt werden.

Es ist weiterhin vorteilhaft, dass Aktuatorik die jeweiligen Matrizenplatten derart hält, dass die Aktuatorik für die jeweilige Matrizenplatte eine jeweilige Rohrschelle zusammenhält. Durch die Aktuatorik wird beispielsweise ein Stift in die Rohrschelle eingefügt und hält damit die Rohrschelle fest, während, wenn der Stift herausgezogen wird, dies nicht mehr der Fall ist und die entsprechenden Matrizenplatten weggeschoben werden können. Auch bei dieser Ausführung ist der Urprungszustand so konzipiert, dass die Verjüngung im Stromlosen Zustand maximal ist. Im unbestomten Zustand wird jede Matrizenplatten von seiner zugehörigen Rohrschelle gehalten, und diese Rohrschellen werden durch einen gemeinsamen Stift gehalten. Bei Detektion eines leichten Crashs schiebt die Aktuatorik den Stift zurück, so können eine oder mehrere Matrizenplatten nicht mehr durch die Rohrschellen gehalten werden und die Sollbruchstellen der betroffenen Matrizenplatten brechen. Der Vorteil ist, dass nur ein Aktuator und nur einen Stift notwendig sind, allerdings muss der Hohlraum (Bauraum) in dem sich die Bügel der Rohrschellen bei bedarf hinbewegen gößer konzipiert werden.

Vorteilhafterweise kann das Deformationselement durch einen Bolzen durch die Öffnungen der Matrizenplatten gedrückt werden. Dazu ist das Deformationselement an dem Ende, das zuerst durch die Öffnungen geführt wird, zumindest teilweise geschlossen, so dass der Bolzen gegen dieses geschlossene Ende geführt werden kann. Damit liegt eine Art von Tiefziehen vor. Der Bolzen ist dabei mit dem Querträger derart verbunden, dass ein Aufprall auf den Bolzen in Crashrichtung eine Kraft ausübt, so dass der Bolzen das Deformationselement durch die jeweiligen Öffnungen drückt.

Ausführungsbeispiele der Erfindung sind in der Zeichnung dargestellt und werden in der nachfolgenden Beschreibung näher erläutert.

Es zeigen Figur 1 ein erstes Schnittbild der erfindungsgemäßen Vorrichtung, Figur 2 ein Flussdiagramm des erfindungsgemäßen Verfahrens, Figur 3 ein zweites Schnittbild der erfindungsgemäßen Vorrichtung, Figur 4 eine Draufsicht dieser Variante, Figur 5 verschiedene Ausprägungen des Deformationselements, Figur 6 ein Kraftwegdiagramm, Figur 7 ein weiteres Kraftwegdiagramm, Figur 8 eine Draufsicht auf die erfindungsgemäße Vorrichtung, die das Rohrschellenprinzip nutzt, Figur 9 eine Schnittdarstellung dieser Variante und Fig. 10 eine weitere Ausführung der erfindungsgemäßen Vorrichtung.

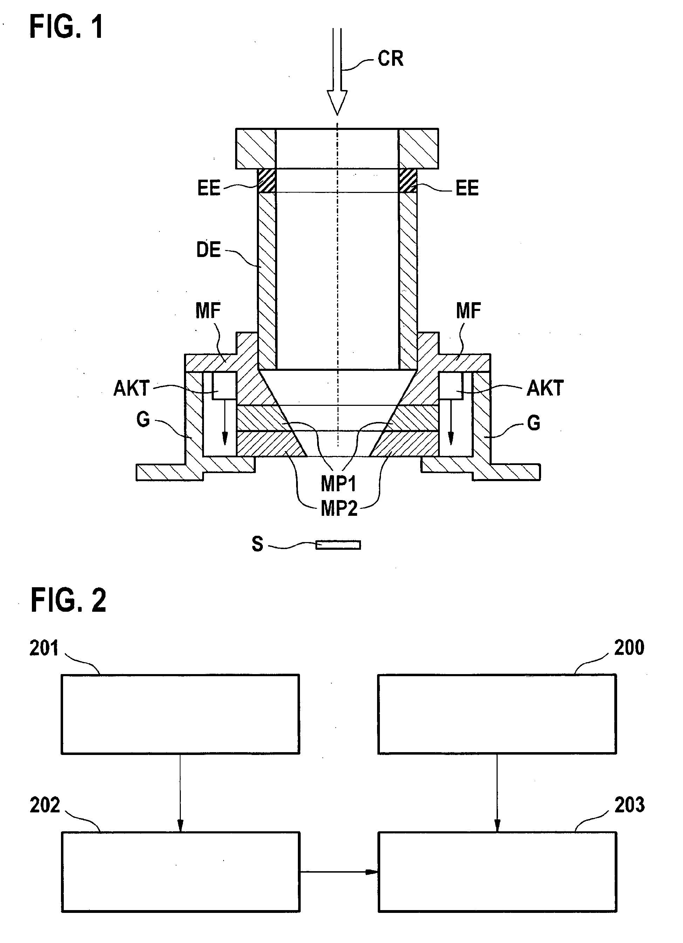

Figur 1 zeigt die erfindungsgemäße Vorrichtung mit einem Deformationselement DE, das axial in Crashrichtung CR ausgerichtet ist. D.h. der Crash bzw. die Crashkraft drückt das Deformationselement DE in Längsrichtung oder axial in Richtung der Matrizenplatten MF bzw. MP1 und MP2 hinein. Vorher muss jedoch das elastische Element EE komprimiert werden, um leichte Stöße wie leichte Parkrempler, usw. auszufiltern. Dies reduziert den Reparaturaufwand für ein Fahrzeug, das von der erfindungsgemäßen Vorrichtung Gebrauch macht. Das elastische Element EE ist daher üblicherweise aus einem elastischen Material, das komprimierbar ist, und aus Materialien wie Gummi oder einem entsprechenden Kunststoff gefertigt ist. Das elastische Element E E kann auch als wenigstens eine Feder, die beispielsweise aus Metall ausgeführt sein kann. Ist das Deformationselement DE beispielsweise als Zylinder ausgeführt, so trifft das auch für das elastische Element EE zu, das dabei als Ring ausgebildet ist. Dies ist auch in der Zeichnung durch die Symmetrieachse, die gestrichelt eingezeichnet ist, angegeben.

Das Deformationselement DE wird zunächst durch die Matrizenplatte MF, die über das Gehäuse G abgestützt wird, verjüngt. Diese Matrizenplatte MF ist fest und führt immer zu einer Verjüngung des Deformationselements DE. Sowie die anderen Matrizenplatten MP1, MP2 ist auch die Matrizenplatte MF aus einem härteren Material als das Deformationselement DE geschaffen, so dass eine Verjüngung des Deformationselements DE überhaupt möglich wird. Andernfalls würde die Matrizenplatte MF verformt werden. Die Abstützung über das Gehäuse G führt dazu, dass die aufgebrachte Crashkraft über das Gehäuse G und dann an den Längsträger, usw. abgeleitet wird. Durch die plastische Verformung wird jedoch bereits durch die Matrizenplatte MF Crashenergie abgebaut.

Da das elastische Element E E wie einer Art Rauschschwelle für Crashvorgänge wirkt, d.h. erst ab einer bestimmten Stärke der Crashvorgänge wird das elastische Element E E soweit komprimiert, dass keine weitere Komprimierung mehr möglich ist, und damit das Deformationselement DE in Richtung auf die Matrizenplatten MF, MP1 und MP2 bewegt wird, so dass das Deformationselement DE nach dem Überschreiten dieser Rauschschwelle immer durch die Matrizenplatte MF plastisch deformiert. Die weiteren Matrizenplatten MP1 und MP2 können je nach Bedarf durch die Aktuatorik AKT gehalten werden und so zu einer weiteren Verjüngung führen. Mit diesen Matrizenplatten MP1 bzw. MP2 erfolgt demnach die Adaption auf den Crashvorgang. D.h. je stärker der Crashvorgang, umso mehr Matrizenplatten werden verwendet. Vorliegend sind in Figur 1 lediglich drei Matrizenplatten dargestellt. Es ist jedoch möglich, dies weiter zu verfeinern, in dem mehr als drei Matrizenplatten verwendet werden. Die Erfindung ermöglicht eine beliebige Anzahl von solchen Matrizenplatten anzusteuern. Die Aktuatorik AKT führt eine Bewegung in Crashrichtung CR aus, und damit in der Längsachse des Deformationselemtens DE mithin einer axialen Bewegung. Da bei der Matrizenplatte MF immer durch das Gehäuse G abgestürzt wird, kann die Aktuatorik hinter dieser Matrizenplatte MF angeordnet werden, um die anderen Matrizenplatten MP1 bzw. MP2 bei Bedarf zu halten und so eine zusätzliche Verjüngung des Deformationselements DE zu bewirken, und damit einen weiteren Abbau von Crashenergie zu ermöglichen. Die Aktuatorik AKT reagiert auf ein Steuersignal, das vorliegend nicht dargestellt ist, aber von außerhalb der erfindungsgemäßen Vorrichtung stammen kann, beispielsweise von einem AirbagSteuergerät. Ein solches Steuergerät kann jedoch sich auch innerhalb der Vorrichtung selbst befinden, und damit das Steuersignal anhand von Sensorsignalen oder anderen Signalen von anderen Steuergeräten erzeugen. Neben einer Rundumsicht wie Video, Radar, Lidar, usw. können auch andere Precrash-Signale wie Bremssignale oder andere ESP-Signale oder Navigationsdaten verwendet werden, um den Crash besser charakterisieren zu können.

Im vorliegenden Beispiel ist in der Rotationsachse eine Sensorik S angeordnet, beispielsweise ein Radar, der durch das Deformationselement DE auf ein mögliches Aufprallobjekt schaut, und damit die Aufprallgeschwindigkeit bestimmen kann, und somit für das Steuersignal mit einer anschließenden Verarbeitung des Sensorsignals des Radar-Sensors sorgt. Dieser Sensor kann anstatt eines Einchip-Radars auch eine andere Ausprägung haben, beispielsweise als Lidar, Ultraschallsensor, ein induktiver oder kapazitiver Sensor.

Die durch die Verjüngung abgebaute Energie hängt auch von der Materialwahl des Deformationselements DE sowie von der Wandstärke und ggf. auch von einer Füllung des Deformationselements DE ab. Die damit maximal abzubauende Energie kann so im Vorhinein je nach Fahrzeugtyp und Spezifikation festgelegt werden.

Figur 2 zeigt in einem Flussdiagramm das erfindungsgemäße Verfahren. Im Verfahrensschritt 201 erfasst der Sensor S die Aufprallgeschwindigkeit, deren Änderung über die Zeit und der Intrusionsweg auf ein Aufprallobjekt. Im Verfahrensschritt 202 erfolgt in Abhängigkeit davon durch die Aktuatorik AKT die Einstellung der erforderlichen Verjüngung. Dies kann beispielsweise über eine Tabelle erfolgen, in der Aufprallgeschwindigkeiten einer bestimmten Verjüngung zugeordnet sind. Infolge des Crashs bewegt sich im Verfahrensschritt 200 das Deformationselement DE nachdem die Rauschschwelle, die durch das elastische Element EE festgelegt ist, überschritten wurde in Richtung der Matrizenplatten MF, MP1 und MP2. Durch die entsprechend eingestellte Verjüngung sind also entsprechende Matrizenplatten durch die Aktuatorik bzw. dessen Schieber gehalten, verjüngt sich das Deformationselement DE bei der Bewegung in Crashrichtung auf die Sensorik S und baut damit Crashenergie durch plastische Verformung ab. Weitere Energie wird über das Gehäuse G abgeleitet.

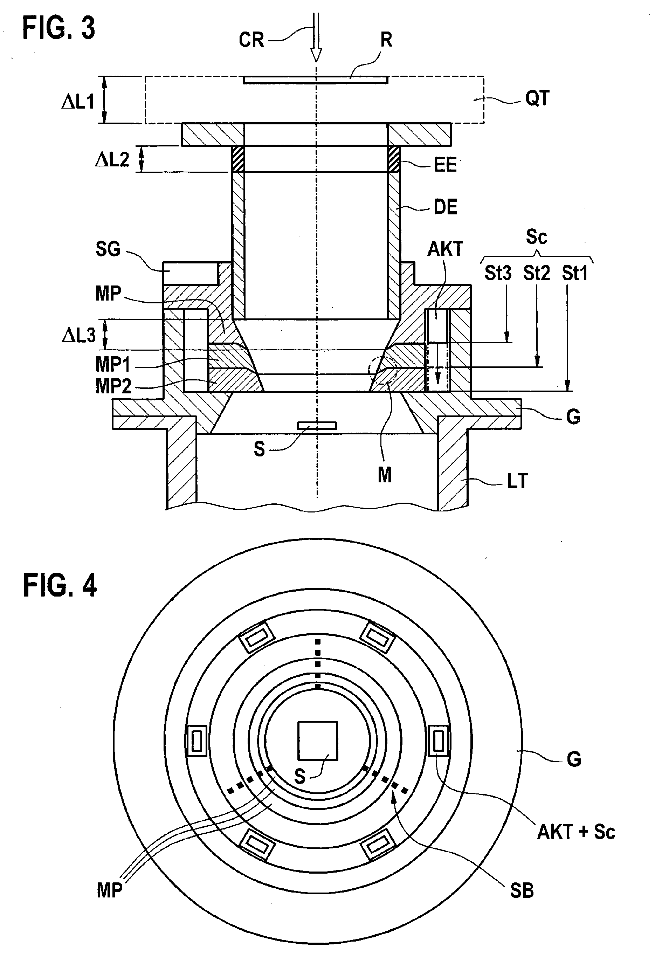

Figur 3 zeigt einen beispielhaften Aufbau der erfindungsgemäßen Vorrichtung. Mit dem Pfeil CR wird wiederum die Crashrichtung dargestellt. Das Aufprallobjekt trifft zunächst auf die Stoßstange (nicht eingezeichnet). Der Stoß wird direkt zum Querträger QT weitergeleitet. Der Querträger trägt im Wesentlichen zur Fahrzeugstäbilität und zur Crashsicherheit bei, er verbindet beide Längsträger bzw. beide Crashstrukturen miteinander. Eine Möglichkeit die aus dem Sensor kommenden Radarwellen besser reflektieren zu können, kann einen Reflektor R eingesetzt werden.Der Querträger QT weist eine Dicke Δ L1 auf. Danach folgt das Deformationselement DE mit dem elastischen Element EE. Die Dicke des elastischen Elements E E ist Δ L2. Die feststehende Matrizenplatte MP folgt danach und weist einen Verjüngungsweg Δ L3 auf. Hinter der feststehenden Matrizenplatte MP ist das Steuergerät SG und auch die Aktuatorik AKT angeordnet mit ihren Schiebern SC in den Stellungen ST1, ST2 und ST3. Die Stellung ST1 ist die sogenannte Initialstellung oder die Fortstellung, d.h. die erfindungsgemäße Vorrichtung ist in der Initialstellung so konfiguriert, dass eine maximale Verjüngung ermöglicht wird, und damit bei einem schweren Crash keine Veränderung durch die Aktuatorik AKT notwendig ist. Diese Stellung ST1 kann beispielsweise durch eine entsprechende Federwirkung sichergestellt sein gegen die Aktuatorik AKT arbeiten muss, um in die anderen Stellungen ST2 und ST3 überzugehen. Die Stellung ST2 hält nur eine weitere Matrizenplatte neben der feststehenden Matrizenplatte, und die Stellung ST3 sorgt dafür, dass sich die Schieber SC hinter der immer verfügbaren Matrizenplatte MP verbergen. Über das Gehäuse G sind die Matrizenplatten abgestützt, wobei das Gehäuse G mit dem Längsträger LT verbunden ist. Die Sensorik S ist wieder auf der Rotationsachse angeordnet und kann somit durch das Deformationselement DE auf ein Aufprallobjekt sehen. Vorliegend ist das Merkmal M herausgehoben. Dieses Merkmal M deutet auf die Art und Weise wie die mittlere und die rechte Matrizenplatte MP angeordnet ist: Dieser Hinterschnitt oder einfacher gesagt, diese Kante, hat eine Doppelfunktion:
- Die Zentrierung der Platten: Alle Platten unabhängig von ihrer Anzahl werden automatisch zentriert, so dass das Deformationselement und die Matrizenplatten dieselbe Achse haben.
- Das Wegschieben der Platten nach Brechen der Sollbruchstellen: In Stellung ST3 muss das Rohr, das ist das Deformationselement DE, nur durch die linke Platte, also die immer feststehende Matrizenplatte MP verjüngt werden. D.h. sowohl die mittlere als auch die rechte Matrizenplatte werden nach außen geschoben. Würde dieses Merkmal M nicht vorhanden sein, und die Matrizenplatten wie gewöhnliche Unterlegscheiben angeordnet sein, würde bei Stellung ST3 nur die mittlere Matrizenplatte nach außen weggeschoben werden, die rechte aber nicht. Folglich würde das Deformationselement DE auf die flache Ebene der rechten Platte stoßen. Es würde eine unvorteilhafte große Kraftspitze aufkommen, weil keine ordnungsgemäße Verjüngung stattfindet.

Die Sensorik ist eine in der Vorrichtung integrierte Geschwindigkeitsmessung, vorzugsweise wie dargestellt ein sogenannter Radar. Neben den geringen Kosten bietet diese Sensor S auch weitere Voraussetzung, um die Anforderungen bezüglich Genauigkeit und Schnelligkeit zu erfüllen. Dieser Radar kann hochgenau in einer Dimension, in diesem Fall axial, die Entfernungen und auch die Entfernungsänderung, also die Geschwindigkeit mit sehr hoher Abtastrate bestimmen. Somit kann zu einem sehr frühen Zeitpunkt nach dem Aufprall die Geschwindigkeit ermittelt werden, mit der sich das Deformationselement am Anfang verformt. Wie bereits erwähnt, sind auch andere Sensoren, wie kapazitive, induktive, Ultrascha- und Bescheunigungssensoren sowie ein Linearpotentiometer für diese Messung geeignet.

Vorzugsweise kann auch eine Precrash-Sensorik das Steuersignal für die Einstellung der Verjüngung beeinflussen. Dieses Precrash-Signal mit dem einen Rundumsicht-Signal kann daher auch von einer Mono- oder Stereo-Video-Sensorik, einem Radar oder Lidar kommen. In diesem Fall kommt der Erfindung die Reversibilität zugute. Da die Aktuatorik AKT reversibel angesteuert werden kann, kann sie zwanglos mit der eben erwähnten Precrash-Sensorik kombiniert werden. Somit kann bereits vor dem Crash die adaptive Struktur, wenn nötig, eingestellt werden. Kommt es nicht zu einer Kollision, kann die Initialstellung wieder eingenommen werden. Ein weiterer Vorteil ist, dass die z. T. verwendeten so genannten Upfrontsensoren, das sind Beschleunigungssensoren an der Fahrzeugfront, entweder eingespart oder direkt in die Vorrichtung integriert werden können.

Die Aktuatorik AKT ist vorliegend mit Schiebern SC verbunden. Die Schieber SC sind Elemente, die je nach Aktuatorstellung ein- und ausgefahren werden können, und zwar in axialer Richtung. Die Aktuatorik AKT kann einen einzelnen, aber auch mehrere Schieber SC bewegen. Die Anzahl der benötigten Schieber SC, in diesem Beispiel sind es sechs, ist vom Matrizenplattenkonzept abhängig. Die Schieber SC haben zum Gehäuse G und zu den Matrizenplatten Spiel. Somit kann die Aktuatorik AKT diese Schieber SC kraftfrei, und somit sehr schnell bewegen.

Die Hauptanforderung an die Aktuatorik ist die hohe Geschwindigkeit. Die Aktuatorik kann stufenlos arbeiten; jedoch ist eine Verstellung in mehreren Stufen vorteilhaft, da letztendlich an Schnelligkeit gewonnen wird. Gemäß Figur 3 wird eine induktive Aktuatorik verwendet. Der Anker und die Schieber SC haben möglichst wenig Masse. Dafür ist beispielsweise eine Ausbildung der Schieber als hohle Elemente möglich. In Stellung ST1 ist ein Hubmagnet in stabiler, ausgefahrener, stromloser Endlage. Der Anker ist fehlerbelastet, so dass diese Endlage robust gehalten werden kann. In Stellung ST2 ist der Hubmagnet mit einer ersten bestromten Spule versehen, so dass der Anker und die Schieber in der konstruktiv vorgegebenen Stellung stehen. In der Stellung ST3 wird der Hubmagnet mit einer zweiten bestromten Spule beaufschlagt, so dass auch hier der Anker und der Schieber in der konstruktiv vorgegebenen Stellung stehen. Ein Vorteil ist, dass eine hohe Aktuatordynamik gewährleistet ist, da die Masse sowie die Reibung gering sind und die Schaltwege kurz sind. Diese kurzen Schaltwege können durch eine optimierte Formgebung der Matrizenplatten noch verkürzt werden, beispielsweise durch eine geringere Dicke am Außendurchmesser. Ein weiterer Vorteil ist, dass die Hubmagneten nicht durch separate Sensoren überwacht werden müssen. Durch die geänderte und messbare Induktivität der Spulen kann die Stellung des Ankers und die korrekte Funktion der Aktuatoren über das Steuergerät SG überwacht werden. Die Aktuatorik AKT ist so zu sagen selbstüberwachend.

Wie oben angegeben, ist in der Initialstellung die Aktuatorik AKT unbestromt und befindet sich daher in der Stellung ST1. In einem Worst Case Szenario beispielsweise bei defekter Aktuatorik würde die adaptive Struktur auf der maximalen Steifigkeit bleiben, d.h. eine maximale Verjüngung bewirken, und somit den Selbstschutz hervorheben. Die Zeit, die dieser Vorrichtung zur Verfügung steht, um von der Stellung maximaler Steifigkeit, d.h. maximale Verjüngung auf eine andere Stellung zu gehen, setzt sich aus folgenden Deformationswegen zusammen:
- Der resultierende Weg aus der Deformation des Querträgers, d.h. der Reflektor R kommt dem Sensor S ein Stück näher. Das ist der Weg Δ L1.
- Der resultierende Weg aus der Deformation des elastischen Elements, das ist der Weg Δ L2.
- Der Weg den das Deformationselement DE zurücklegt, bis der kleinste Durchmesser der erste Matrizenplatte erreicht ist. Das ist der Start der Verjüngung. Dies ist der Weg Δ L3.
- Damit kann festgehalten werden, dass die Reaktionszeit, die von der Aktuatorik AKT, also die Stellzeit, die Rechenzeit des Steuergeräts SG und die Erfassung und Bearbeitungszeit der Sensorik S benötigt wird, um eine Steifigkeitsänderung der erfindungsgemäßen adaptiven Struktur durchzuführen, durch das Abfahren der Längen Δ L1 + Δ L2+ Δ L3.

Im Folgenden wird die Funktionsweise der Struktur gemäß Figur 3 noch einmal erläutert. Als Option können zunächst Precrash-Sensoren eine bevorstehende Kollision erkennen und zwischen einem stehenden und einem fahrenden Objekt unterscheiden. Ggf. kann auch die Größe und die Masse des Aufprallobjekts festgestellt werden. Dann ist der Zeitpunkt gegeben zudem das Eigenfahrzeug Kontakt mit dem Hindernis, also mit dem Aufprallobjekt hat. Die Verformung des Vorderwagens im Bereich des Querträgers QT beginnt. Der Querträger QT verformt das elastische Element EE des Deformationselements DE. Der interne Geschwindigkeitssensor erfasst die Verformung, und zwar den Weg, die Geschwindigkeit und deren Änderung. Das Steuergerät SG beurteilt die Stärke des Unfalls und entscheidet über die erforderliche Festigkeit der Crashbox. Das Steuergerät ist wie oben angegeben, entweder Teil der Vorrichtung oder extern angeordnet. Das Steuergerät SG gibt ein entsprechendes Signal an die Aktuatorik AKT, so dass die die entsprechende Stellung ST1 bis ST3 bewirken. Die plastische Verformung der Crashbox beginnt und dafür gibt es drei unterschiedliche Szenarien:
1. Szenario
   Das Steuergerät SG registriert einen schweren Unfall. Es muss die gesamte Steifigkeit der Crashbox ausgenutzt werden. Es wird soviel Energie vernichtet wie möglich. Die Aktuatorik AKT befindet sich bereits in der Initialstellung in der voll ausgefahrenen Stellung, d.h. im Beispiel bis zur dritten Matrizenplatte. Dies bedeutet die kürzeste mögliche Reaktionszeit. Durch das Vorhandensein der Schieber SC können die Teile der Matrizenplatte MP nicht nach außen weichen. Die Sollbruchstellen werden damit nicht gebrochen. Es wird die maximale Verjüngung stattfinden, das Deformationselement muss durch alle Matrizenplatten verformt werden. Die Verformung des Eigenfahrzeugs geht deutlich über die Crashbox hinaus. Im Längsträger wird weitere Energie absorbiert. Damit wird ein Selbstschutz erreicht.
2. Szenario
   Das Steuergerät SG registriert einen mittelschweren Unfall. Die Steifigkeit der Crashbox wird gezielt und zugunsten des Unfallgegners reduziert, um die Energie so optimal wie möglich abzubauen. Die Aktuatorik AKT fährt die Schieber SC bis zur zweiten, d.h. der mittleren Matrizenplatte im Beispiel, zurück. Die letzte Matrizenplatte mit dem kleinsten Durchmesser wird durch den Schieber SC am Umfang nicht mehr gehalten. Beim Ankommen des Deformationselements DE werden die durch das Brechen der Sollbruchstelle entstandenen drei Segmente der Platte nach außen weggeschoben. Diese letzte Matrizenplatte verursacht keine Verjüngung und nimmt somit keine Energie mehr auf. Im Gegensatz dazu wird die mittlere Matrizenplatte noch im Umfang von den Schiebern gestützt. Diese kann somit nicht nach außen gedrückt werden, und verursacht damit eine Verjüngung und absorbiert somit Energie. Die erste Matrizenplatte bleibt in jedem Crashfall vorhanden. Damit werden die Crashbox und ein Teil des Längsträgers verformt. Damit wird eine gute Kompatibilität für einen Crash und einen Partnerschutz erreicht, und dies ist auch für einen Seitencrash geeignet.
3. Szenario
   Das Steuergerät SG registriert einen leichten Unfall. Die Aktuatorik AKT fährt die Schieber SC komplett zurück. Dies bedeutet die höchste Reaktionszeit. Die Reaktionszeit ist keinesfalls problematisch, denn wenn ein leichter Unfall szensiert wird, steht auch am meisten Zeit zur Verfügung, weil die Deformation langsam geschieht. Weder die letzte Matrizenplatte, die rechte mit dem kleinsten Durchmesser noch die mittlere werden durch die Schieber am Umfang gehalten. Am Ankommen des Deformationselements DE werden die drei Segmente der mittleren und der rechten Matrizenplatte nach außen weggeschoben, denn die Sollbruchstellen beider Matrizenplatten reißen, Diese verursachen keine Verjüngung und nehmen somit keine Energie mehr auf. Die erste Matrizenplatte bleibt in jedem Fall vorhanden. Es wird nur die Crashbox verformt und der Längsträger bleibt intakt. Dies ist für den Fußgängerschutz bzw. für einen so genannten AZT (Allianz-Zentrum für Technik) Reparatur-Crash geeignet (16 h/km).

Figur 4 zeigt eine Draufsicht aus der Crashrichtung auf die erfindungsgemäße Vorrichtung gemäß Figur 3. Man sieht die rotationssymmetrischer Ausführung aller Komponenten, und zwar das Gehäuse G, der Matrizenplatten MP, der Sollbruchstellen SB, der Schieber SC und die Aktuatoren AKT sowie die Sensorik S, die im Zentrum angeordnet ist.

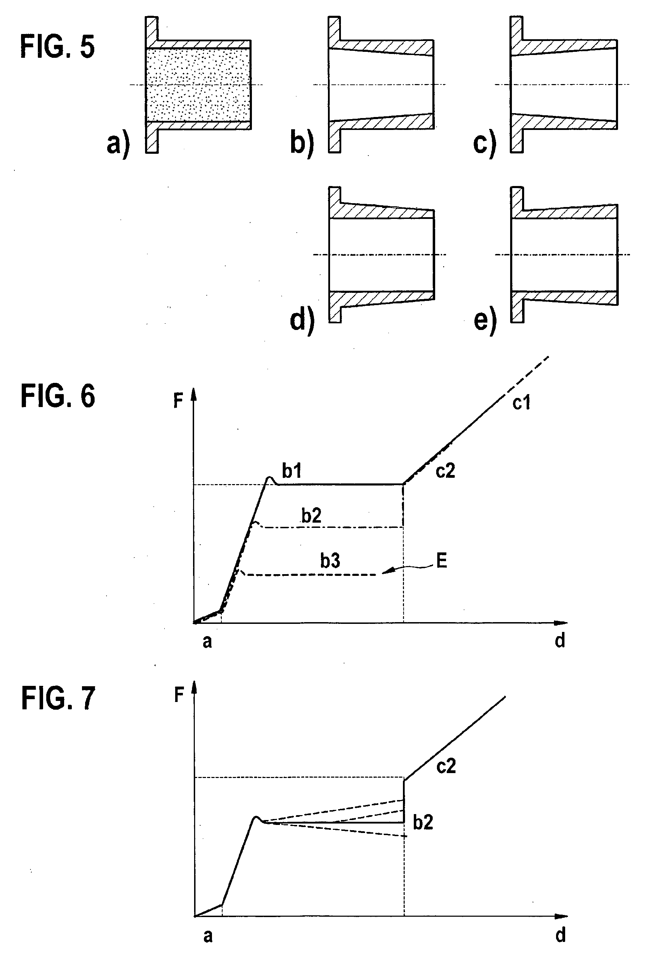

Figur 5 zeigt Ausführungsbeispiele für das Deformationselement. In Figur 5a wird eine Ausführung gezeigt, die das Deformationselement, das ein Rohr mit einem Anschlag ist, mit einem gefüllten Innenraum vorliegend mit Aluminiumschaum sein kann. In Figuren 5b, 5c, 5d und 5e sind Innen- und/oder Außenwände nicht parallel zur Rotationsachse, sondern weisen einen Winkel zur Rotationsachse auf. Das Ausfüllen erhöht die Robustheit gegenüber dem Knicken des Deformationsrohrs. Eine konstante Wandstärke des Deformationselementes, wie in Fig. 5a, fürht zu einem konstanten Kraftverlauf über die Verjüngungszeit. Ist die Wandstärke des Deformationselementes progressiv, wie in Fig 5c oder 5d steigt der Kraftvelauft. Ist dagegen die Wandstäke degressiv, wie in Fig 5b oder 5e, fällt der Kraftverlauf. Ein Beispiel der progressiven und degressiven Kraftverläufe sind in Fig. 7 zu sehen.

Figur 6 zeigt ein mögliches Kraftniveau einer adaptiven Struktur. Es ist ein Diagramm, in dem werden die Kraft in der Koordinate und der Weg in den Abszessen dargestellt. Die Kurve unterteilt sich in drei Segmente. Das Segment A ist der Anfangsbereich der Crashbox, der elastische Bereich und der Bereich, an dem die Stoßstange zerdrückt wird. Diese Charakteristik ist von den Crashbox-Einstellungen unabhängig und immer gleich. Das Segment B spaltet sich auf in drei Linien, nämlich B1, B2 und B3 je nach den unterschiedlichen Steifigkeitseinstellungen der erfindungsgemäßen Vorrichtung. Dabei sind natürlich auch je nach Ausprägung der Vorrichtung noch weitere Niveaus noch im Bereich der Crashstruktur einstellbar. Die Kurve B3 endet, weil dann die Verformung bei einem leichten Crash endet. B1 und B2 gehen über in den Bereich C. Hier wird der Längsträger je nach Crashwerte mehr oder weniger ebenfalls verformt Diese Charakteristik ist ebenfalls immer gleich, da keine Adaption vorliegt.

Figur 7 zeigt mögliche Kraftniveausvariationen einer adaptiven Struktur in Stellung 2. Dabei gelingt die Variation des Segments B durch die entsprechenden Geometrien des Deformationselements.

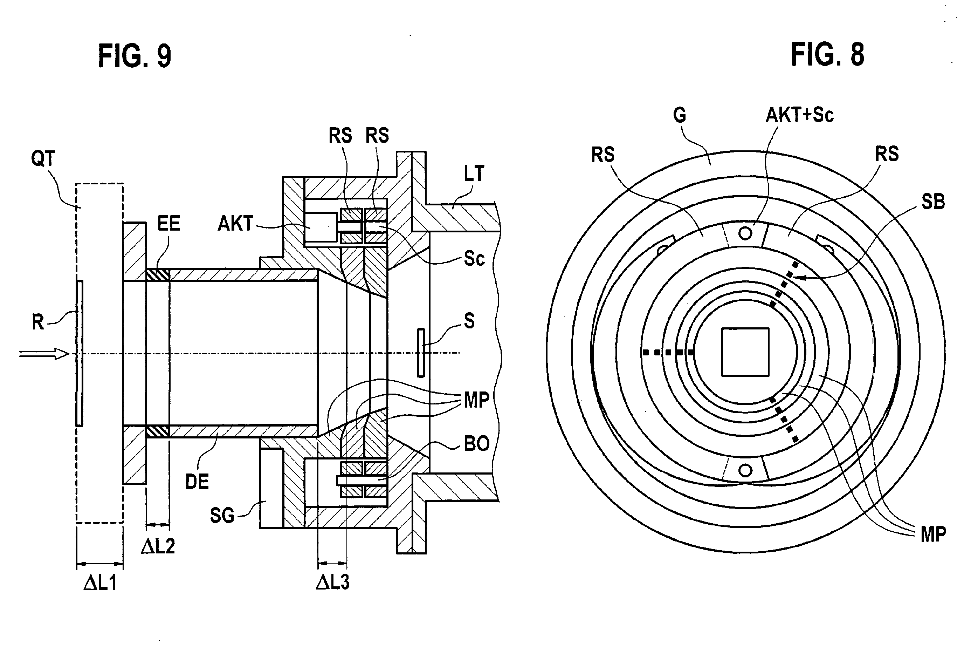

Figur 8 zeigt eine Draufsicht auf ein weiteres Ausführungsbeispiel der erfindungsgemäßen Vorrichtung. Wiederum wird von der Crashrichtung aus auf die Vorrichtung gesehen. Die rotationssymmetrische Ausprägung ist deutlich, in dem Gehäuse G der Aktuatorik AKT mit Schiebern SC, den Sollbruchstellen SB der Matrizenplatten MP, neu sind hier die Rohrschellen RS 1 und RS2, die zum Halten der Matrizenplatten MP1 und MP2 dienen. Dies wird deutlicher in der Schnittdarstellung gemäß Figur 9. Gleiche Bezugszeichen zeigen hier gleiche Komponenten, wobei der Unterschied hier lediglich im Halten der Matrizenplatten MP durch die Rohrschäden RS1 und RS2 erfolgt. Eine Rohrschelle nämlich für die mittlere Matrizenplatte und eine Rohrschelle nämlich RS2 für die rechte Matrizenplatte. Die steifste Konfiguration ist dabei gegeben, wenn die Aktuatorik AKT die Schieber komplett ausführt und die Rohrschellen RS1 und RS2 zusammenhält. Dies ist nach wie vor der stromlose Zustand mit Priorität auf den Selbstschutz. In der mittleren Position der Stellung ST2 blockiert der Schieber der Aktuatorik nur die erste Rohrschellen RS1. Die zweite Rohrschelle wird vom introdierenden Deformationselement DE geöffnet, beziehungsweise die beiden Bügel der Rohrschelle werden nach außen gedrückt. Die Funktionsweise und die Anordnung der Matrizenplatten MP bleiben dagegen unverändert. Der wesentliche Vorteil dieser Variante ist, dass nur ein einziger Aktuator und ein einziger Schieber notwendig sind. Dies macht das ganze System einfacher, robuster und auch kostengünstiger. Nachteilig gegenüber dem anderen Ausführungsbeispiel gemäß Figur 4 ist jedoch, dass mehr Bauraum vorsehen werden muss, so dass sich die Bügel der Rohrschellen öffnen können, ohne mit dem Deformationselement DE zu kollidieren.

Weitere funktional ähnlich operierende Strukturen, um die Matrizenplatten zu halten, können angewendet werden.

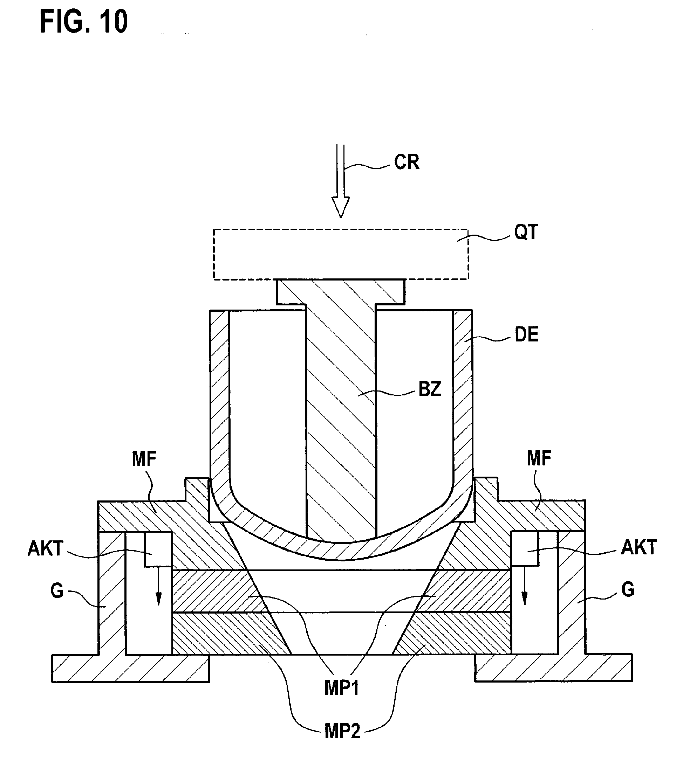

Fig. 10 zeigt eine weitere Ausführungsform der erfindungsgemäßen Vorrichtung, die nicht ein Rohr durch die Verjüngung drückt, sondern eine Art des Tiefziehens darstellt. Hierbei ist ein Bolzen BZ mit dem Querträger QT derart verbunden, dass ein Aufprall auf den Querträger QT bewirkt, dass der Bolzen in Crashrichtung CR bewegt wird und damit das Deformationselement DE durch die Öffnungen der Matrizenplatten MF, MP1 und MP2 treibt. Die Matrizenplatten MP1 und MP2 werden je nach Ansteuerung durch die Aktuatorik AKT gehalten. Die Kraftableitung geschieht wiederum teilweise über das Gehäuse G. Das Deformationselement DE ist an dem Ende, das zuerst durch die Öffnungen getrieben wird, zumindest teilweise geschlossen, so dass der Bolzen BZ das Deformationselement DE durch die Öffnungen der Matrizenplatten MF, MP1, MP2 drücken kann.

## Patentansprüche

1. Vorrichtung zum adaptiven Abbau von Crashenergie mit
- einem Deformationselement (DE), das zum Abbau der Crashenergie in einer Richtung eine erste Bewegung ausführt und dabei eine Verjüngung erfährt.
- einer Aktuatorik (AKT), die in Abhängigkeit von einem Steuersignal die Verjüngung für den adaptiven Abbau einstellt, **dadurch gekennzeichnet, dass** die Aktuatorik (AKT) für eine zweite Bewegung in der Achse der Richtung der ersten Bewegung konfiguriert ist, um die Verjüngung durch diese zweite Bewegung einzustellen, wobei in Folge dieser zweiten Bewegung die Aktuatorik (AKT) wenigstens eine Matrizenplatte (MF, MP1, MP2) mit einer jeweiligen Öffnung, durch die das Deformationselement (DE) getrieben wird, für die Einstellung der Verjüngung halten kann und eine Anzahl der von der Aktuatorik (AKT) gehaltenen Matrizenplatten (MF, MP1, MP2) vom Steuersignal abhängt, wobei die jeweilige gehaltene Matrizenplatte eine Verjüngung des Deformationselements (DE) bewirkt.

2. Vorrichtung nach Anspruch 1, **dadurch gekennzeichnet, dass** sich die nicht gehaltenen Matrizenplatten in im Wesentlichen senkrecht zur Achse wegschieben, wobei die Matrizenplatten jeweils mehrere Segmente aufweisen.

3. Vorrichtung nach Anspruch 1 oder 2, **dadurch gekennzeichnet, dass** die Vorrichtung ein elastisches Element (EE) aufweist, das derart aufgebracht ist, dass das elastische Element (EE) einen ersten vorbestimmten Weg (ΔL2) aufnimmt, bevor das Deformationselement (DE) bewegt.

4. Vorrichtung nach einem der vorhergehenden Ansprüche, **dadurch gekennzeichnet, dass** eine Initialkonfiguration der Vorrichtung derart ist, dass eine maximale Verjüngung des Deformationselements (DE) vorgesehen ist und alle Matrizenplatten (MP) gehalten werden.

5. Vorrichtung nach einem der vorhergehenden Ansprüche 1 bis 4, **dadurch gekennzeichnet, dass** die jeweiligen Matrizenplatten außer derjenigen mit der größten Öffnung jeweils wenigstens eine Sollbruchstelle aufweisen, die durch die erste Bewegung des Deformationselements (DE) gebrochen wird, wenn kein Halten der jeweiligen Matrizenplatten durch die Aktuatorik (AKT) vorliegt.

6. Vorrichtung nach einem der vorhergehenden Ansprüche, **dadurch gekennzeichnet, dass** die wenigstens eine Matrizenplatte (MP1, MP2) eine Beschichtung zur Verringerung der Reibung aufweist.

7. Vorrichtung nach einem der vorhergehenden Ansprüche, **dadurch gekennzeichnet, dass** die Vorrichtung einen Geschwindigkeitssensor zur Erfassung der Aufprallgeschwindigkeit und/oder deren Änderung und/oder des Intrusionsweges aufweist, wobei anhand dessen Ausgangssignals das Steuersignal erzeugt wird.

8. Vorrichtung nach einem der vorhergehenden Ansprüche, **dadurch gekennzeichnet, dass** die Aktuatoren (AKT) induktiv betätigbar ist.

9. Vorrichtung nach einem der vorhergehenden Ansprüche, **dadurch gekennzeichnet, dass** die Aktuatoren (AKT) die jeweilige Matrizenplatte (MP1, MP2) derart hält, dass die Aktuatorik (AKT) für die jeweilige Matrizenplatte (MP1, MP2) eine jeweilige Rohrschelle zusammenhält.

10. Verfahren zum adaptiven Abbau von Crashenergie in folgenden Verfahrensschritten:
- ein erstes Bewegen eines Deformationselements (DE) zum Abbau der Crashenergie in einer Richtung und Verjüngen des Deformationselements (DE) dabei
- Einstellen der Verjüngung für den adaptiven Abbau in Abhängigkeit von einem Steuersignal durch eine Aktuatorik (AKT), **dadurch gekennzeichnet, dass** eine zweite Bewegung der Aktuatorik (AKT) in der Achse der Richtung erfolgt, um die Verjüngung des Deformationselements (DE) einzustellen, wobei in Folge dieser zweiten Bewegung die Aktuatorik wenigstens eine Matrizenplatte mit einer jeweiligen Öffnung durch die das Deformationselement (DE) getrieben wird, für die Einstellung der Verjüngung gehalten werden kann und eine Anzahl der von der Aktuatorik (AKT) gehaltenen Matrizenplatten vom Steuersignal abhängt, wobei die jeweils gehaltene Matrizenplatte eine Verjüngung des Deformationselements (DE) bewirkt.

11. Vorrichtung nach einem der Ansprüche 1-9, **dadurch gekennzeichnet, dass** das Deformationselement (DE) durch wenigstens einen Bolzen (BZ) für die erste Bewegung durch die jeweilge Öffnung gedrückt wird.

## Claims

1. Device for adaptively dissipating crash energy, comprising
- a deformation element (DE), which to dissipate the crash energy performs a first movement in one direction and thereby undergoes a tapering,
- an actuator system (AKT), which sets the tapering for the adaptive dissipation in dependence on a control signal, **characterized in that** the actuator system (AKT) is configured for a second movement in the axis of the direction of the first movement, in order to set the tapering by this second movement, wherein, as a consequence of this second movement, the actuator system (AKT) can hold at least one die plate (MF, MP1, MP2) with a respective opening, through which the deformation element (DE) is driven, for the setting of the tapering, and the specific number of die plates (MF, MP1, MP2) that are held by the actuator system (AKT) is dependent on the control signal, the respectively held die plate bringing about a tapering of the deformation element (DE).

2. Device according to Claim 1, **characterized in that** the non-held die plates slide away substantially perpendicularly in relation to the axis, the die plates respectively having multiple segments.

3. Device according to Claim 1 or 2, **characterized in that** the device has an elastic element (EE), which is applied in such a way that the elastic element (EE) takes up a first predetermined displacement (ΔL2) before the deformation element (DE) moves.

4. Device according to one of the preceding claims, **characterized in that** an initial configuration of the device is such that a maximum tapering of the deformation element (DE) is provided and all of the die plates (MP) are held.

5. Device according to one of the preceding Claims 1 to 4, **characterized in that**, apart from the one with the largest opening, the respective die plates each have at least one predetermined breaking point, which is broken by the first movement of the deformation element (DE) if there is no holding of the respective die plates by the actuator system (AKT).

6. Device according to one of the preceding claims, **characterized in that** the at least one die plate (MP1, MP2) has a coating to reduce friction.

7. Device according to one of the preceding claims, **characterized in that** the device has a velocity sensor for sensing the impact velocity and/or the change thereof and/or the intrusion displacement, the control signal being generated on the basis of the output signal of said sensor.

8. Device according to one of the preceding claims, **characterized in that** the actuators (AKT) can be actuated inductively.

9. Device according to one of the preceding claims, **characterized in that** the actuators (AKT) hold the respective die plate (MP1, MP2) in such a way that the actuator system (AKT) for the respective die plate (MP1, MP2) holds together a respective pipe clip.

10. Method for adaptively dissipating crash energy by the following method steps:
- a first movement of a deformation element (DE) to dissipate the crash energy in one direction and at the same time tapering of the deformation element (DE)
- setting of the tapering for the adaptive dissipation in dependence on a control signal by an actuator system (AKT), **characterized in that** a second movement of the actuator system (AKT) takes place in the axis of the direction in order to set the tapering of the deformation element (DE), wherein, as a consequence of this second movement, the actuator system can hold at least one die plate with a respective opening, through which the deformation element (DE) is driven, for the setting of the tapering, and the specific number of die plates that are held by the actuator system (AKT) is dependent on the control signal, the respectively held die plate bringing about a tapering of the deformation element (DE).

11. Device according to one of Claims 1-9, **characterized in that** the deformation element (DE) is pressed through the respective opening by at least one pin (BZ) for the first movement.

## Revendications

1. Dispositif de dégradation adaptative de l'énergie de collision, comprenant
- un élément de déformation (DE) qui, pour dégrader l'énergie de collision dans une direction, accomplit un premier mouvement et subit alors un rétrécissement,
- un dispositif d'actionnement (AKT) qui règle le rétrécissement pour la dégradation adaptative en fonction d'un signal de commande, **caractérisé en ce que** le dispositif d'actionnement (AKT) est configuré pour un deuxième mouvement dans l'axe de la direction du premier mouvement afin de régler le rétrécissement par le biais de ce deuxième mouvement, le dispositif d'actionnement (AKT), en conséquence de ce deuxième mouvement, pouvant retenir au moins une plaque de matrice (MF, MP1, MP2) dotée d'une ouverture respective, à travers laquelle est entraîné l'élément de déformation (DE), pour le réglage du rétrécissement et un nombre de plaques de matrice (MF, MP1, MP2) retenues par le dispositif d'actionnement (AKT) dépendant du signal de commande, la plaque de matrice respective retenue produisant un rétrécissement de l'élément de déformation (DE).

2. Dispositif selon la revendication 1, **caractérisé en ce que** les plaques de matrice non retenues s'éloignent en coulissant pour l'essentiel perpendiculairement à l'axe, les plaques de matrice présentant respectivement plusieurs segments.

3. Dispositif selon la revendication 1 ou 2, **caractérisé en ce que** le dispositif présente un élément flexible (EE) qui est monté de telle sorte que l'élément flexible (EE) décrit une première course prédéfinie (ΔL2) avant que l'élément de déformation (DE) se déplace.

4. Dispositif selon l'une des revendications précédentes, **caractérisé en ce qu'**une configuration initiale du dispositif est telle qu'il est prévu un rétrécissement maximal de l'élément de déformation (DE) et toutes les plaques de matrice (MP) sont retenues.

5. Dispositif selon l'une des revendications 1 à 4, **caractérisé en ce que** les plaques de matrice respectives, à l'exception de celles dotées de l'ouverture la plus grande, présentent respectivement au moins un point de rupture voulu qui est rompu par le premier mouvement de l'élément de déformation (DE) lorsqu'il n'existe aucune retenue des plaques de matrice respectives par le dispositif d'actionnement (ΔKT).

6. Dispositif selon l'une des revendications précédentes, **caractérisé en ce que** l'au moins une plaque de matrice (MP1, MP2) présente un revêtement pour réduire la friction.

7. Dispositif selon l'une des revendications précédentes, **caractérisé en ce que** le dispositif présente un capteur de vitesse pour détecter la vitesse d'impact et/ou sa modification et/ou le trajet d'intrusion, le signal de commande étant généré à l'aide de son signal de sortie.

8. Dispositif selon l'une des revendications précédentes, **caractérisé en ce que** les actionneurs (AKT) peuvent être actionnés de manière inductive.

9. Dispositif selon l'une des revendications précédentes, **caractérisé en ce que** les actionneurs (AKT) retiennent la plaque de matrice (MP1, MP2) respective de telle sorte que le dispositif d'actionnement (AKT) pour la plaque de matrice (MP1, MP2) respective maintient ensemble un collier à tube respectif.

10. Procédé de dégradation adaptative de l'énergie de collision au cours des étapes de procédé suivantes :
- un premier mouvement d'un élément de déformation (DE) pour dégrader l'énergie de collision dans une direction et alors rétrécissement de l'élément de déformation (DE),
- réglage du rétrécissement pour la dégradation adaptative en fonction d'un signal de commande par un dispositif d'actionnement (AKT), **caractérisé en ce qu'**un deuxième mouvement du dispositif d'actionnement (AKT) a lieu dans l'axe de la direction afin de régler le rétrécissement de l'élément de déformation (DE), le dispositif d'actionnement, en conséquence de ce deuxième mouvement, pouvant retenir au moins une plaque de matrice dotée d'une ouverture respective, à travers laquelle est entraîné l'élément de déformation (DE), pour le réglage du rétrécissement et un nombre de plaques de matrice retenues par le dispositif d'actionnement (AKT) dépendant du signal de commande, la plaque de matrice respectivement retenue produisant un rétrécissement de l'élément de déformation (DE).

11. Dispositif selon l'une des revendications 1 à 9, **caractérisé en ce que** l'élément de déformation (DE) est poussé à travers l'ouverture respective par au moins un goujon (BZ) pour le premier mouvement.
